# EUROPEAN PATENT APPLICATION

(11) **EP 0 811 323 A1**
(43) Date of publication of application: **10.12.1997**
(21) Application number: 96500080.5
(22) Date of filing: 21.06.1996
(51) Int. Cl.: A23B 7/157, A23B 7/154

(54) **Procedure for preserving fresh peeled potatoes**

(30) Priority: 03.06.1996 ES 9601220
(71) Applicant: PAPANOVA, S.A., 28529 Rivas Vaciamadrid, Madrid (ES)
(72) Inventor: Gomez Giménez, Victor Luis, 28529 Rivas Vaciamadrid, Madrid (ES)
(74) Representative: Polo Flores, Carlos

(57) **Abstract**

The potatoes, once peeled and either in cut or non-cut condition, are mixed with an aqueous solution in which a combination of two antioxidizing agents participate, specifically potassium metabisulfite and sodium disulfite, as well as a humidifying agent, specifically sorbitol, and a synergetic agent, specifically ascorbic D.L. acid, wherein prior to immersing the peeled potatoes in said aqueous solution there exists an intermediate humidification phase consisting of a water bath lasting for a period of approximately 30 minutes. The antioxidizing agents participate in a proportion of 0.6 grams per liter of water, the humidifying agent in 0.1 gram per liter of water and the ascorbic D.L. acid in 0.3 grams per liter of water. The potatoes, after being kept for 2 to 5 minutes in the aqueous solution, are allowed to drain and are finally packed in either a normal atmosphere or in a modified or under vacuum atmosphere, thereby succeeding in maintaining their organoleptic properties for a period of time in the order of 21 days, or 50 days in the case of whole potatoes.

## Description

### PURPOSE OF THE INVENTION

The invention is related to a new procedure for preserving whole or cut fresh peeled potatoes. The procedure allows for non-frozen potatoes to be preserved in optimum consumption condition for a period of up to fifty days, which obviously considerably facilitates the distribution and marketing process.

The procedure is valid for any type of peeled potato, either whole or cut into various shapes as required for their subsequent use, i.e. for frying, for making omelettes, etc.

A further object of the invention involves processing times and the fact that the potatoes can reach the consumer without losing their vitamin content and without any appreciable alteration to their natural flavour or texture.

### BACKGROUND OF THE INVENTION

Besides the storage, distribution and marketing aspects of whole, non-peeled potatoes, there is another consumption area in which the potato is offered to the consumer in peeled condition and cut up in various fashions, depending on its subsequent use, which has progressively increased the demand for this type of pre-processed potato and which has resulted in an obvious reduction in the demand for whole, non-peeled potatoes.

This new potato marketing method poses serious problems related to preservation in view that, once peeled, many of the potato's components, particularly the carbon hydrates, present an extremely high reactivity which leads to oxidation and causes a browning of the potato which in turn leads to an undesirable appearance, smell and taste which entails consumer rejection.

It was thus necessary to submit the potato to processing and preservation to allow the peeled and cut product on demand to reach the market in optimum condition from a nutritional and organoleptic viewpoint. One of the solutions adopted was to freeze the peeled and, as the case may be, cut potato in order to provide an efficient solution to the preservation problem, considering that at such temperatures oxidation reactions are totally inhibited, although it led to the problems deriving from all freezing processes: high costs and the permanent need to avoid interruptions in the freezing chain. In view of the basic and economical character of the product, freezing was out of the question as the final solution demanded by the peeled and, if need be, cut potato market, which requires reasonable preservation times and a price in accordance with the above characteristics applicable to this basic daily consumption food product.

In patent ES-2 033 194, "Procedure for processing fresh potatoes", a procedure is proposed whereby peeled and cut potatoes are immersed for a period of time not inferior to one hour and as high as twelve hours in a first water bath designed to eliminate the starch content, subsequently passing on to a second water bath incorporating sodium metabisulfite and acting as an antioxidizing agent, where they remain for 15 minutes. The potatoes are then drained, packaged and kept at a temperature of 0 to 4°C which preserves them for two or three days. This procedure poses some serious inconveniences, the most important being the high cost deriving from the extremely long permanence of the potatoes in the baths, particularly the starch removal bath, and the significant loss of vitamin content, mainly the hydrosoluble vitamins (vitamin C or ascorbic acid, and the B complex, particularly niacin) as a result of the high solubilization imposed on the potatoes by the extended contact with water.

These problems are solved by the procedure claimed in Spanish invention patent N° 9500778 and addition certificate N° 9501213, whereby in both these cases the procedure consists in immersing the peeled, cut and washed potatoes in an aqueous solution based on a combination of three antioxidizing agents, a bleaching additive and a synergic effect component.

### DESCRIPTION OF THE INVENTION

The procedure of the invention, based precisely on the procedures described in the main invention patent N° 9500778 and its addition certificate N° 9501213, introduces a series of changes involving the use of the antioxidizing agents and the rest of the components as a means of achieving the preservation of potatoes for an extended period of time.

More specifically, the procedure of the invention includes an initial humidification phase in which the peeled potatoes - either cut or not - are immersed in a water bath followed by hygienic washing, the preferred length of the humidification phase being 30 minutes.

Furthermore, the procedure of the invention uses a humidifying agent which replaces the previously used bleaching agent, said humidifying agent being sorbitol.

Likewise, in the procedure of the invention, the synergic effect component, namely ascorbic D.L. acid, is used not only because of its antioxidizing synergic function but mainly because of the antimicrobic action resulting from the fact that the ascorbic acid reduces the pH of the aqueous solution when mixed with the antioxidizers.

A considerable amount of ascorbic D.L. acid is involved in the procedure of the invention, thus precluding the use of the previously applied antioxidizing agent.

Basically, the procedure of the invention consists in immersing the potatoes in an aqueous solution under the following conditions:

Intervening in the aqueous solution are, on the one hand, a combination of two antioxidizing agents, specifically potassium metabisulfite and sodium disulfite, and, on the other, a humidifying agent, specifically sorbitol, which in addition to its specific effect reinforces the reducing character of the aforementioned combination, and finally ascorbic D.L. acid, which, as a result of the synergic effect, further increases the effect of the SO₂ group while replacing the possible loss of C vitamin during the initial and conventional hygienic washing phases. Likewise, the ascorbic D.L. acid, precisely because of its acid nature, reduces the pH in the aqueous solution to an approximate pH value of 3.5, furthermore providing an antimicrobic or antiseptic effect designed to prevent possible proliferation of bacteria that would alter the finished product.

The essential aspect of the procedure consists in preventing the polyphenol content of the potatoes, associated to the starch in the potatoes, from remaining unaltered during the preservation phase.

On the other hand, the combination of the two atioxidizing agents, the humidifying agent and the ascorbic acid surprisingly results in that the individual action of each component is multiplied by three.

According to a further condition of the proposed procedure, the combination of the two mentioned antioxidizing agents participates in the aqueous solution in a proportion of 0.6 grams of said combination per liter of water, while sorbitol participates in a proportion of 0.1 grams per liter of water and ascorbic D.L. acid does so in a proportion of 0.3 grams per liter of water.

Immersion of the potatoes in this aqueous solution is at ambient temperature, for a period of 2 to 5 minutes.

Furthermore, the potatoes should be immersed in a volume of solution which, measured in liters, coincides with the number of kilograms of potatoes being processed. Immersion may be performed in isolated cycles, so that after processing a given mass or amount of potatoes the aqueous solution may discarded and replaced by new solution, or else the immersion can be performed in a continuous process whereby the potatoes and the aqueous solution both continuously enter a tubular container via opposite ends.

Finally, and according to a last phase comprised in the procedure, the processed potatoes are packed. Optionally, the packing may be applied under vacuum or modified atmosphere conditions.

Referring once again to the aqueous solution components, the above mentioned values may fluctuate depending on the age of the potatoes being processed, since, with the passing of time, potatoes loose water, causing a progressive increase in the amount of starch. Therefore, in view of the higher polyphenol content in relation to the weight of the potatoes, the aqueous solution component quantities must likewise be increased in the same proportion.

### EXAMPLE OF A PRACTICAL EMBODIMENT OF THE INVENTION

A 500 kilogram mass of peeled and cut potatoes are placed on a conveyor belt and made to advance under a shower of water at a conveyor belt speed which provides a 10-minute permanence of the potatoes under the water. Subsequently, the potatoes are placed in a water bath for a humidifying phase of approximately 20 minutes.

The conveyor belt runs into a tank with a capacity in excess of 1.000 liters, so that after the initial washing phase previously described the potatoes fall into the tank, which is filled with 500 liters of a solution prepared beforehand by stir mixing 500 liters of water with 300 grams of a mixture of potassium metabisulfite and sodium disulfite, 50 grams of sorbitol and 150 grams of ascorbic D.L. acid, the potassium metabisulfite and the sodium disulfite participating in equal proportions.

The potatoes are maintained in the tank for 4 minutes before being unloaded; this process takes place at ambient temperature.

The potatoes are then drained and transported toward a packaging machine, wherein they are placed in opaque plastic bags and refrigerated to a temperature in the range of 0° to 4°C, thus ensuring that they are maintained in perfect condition for a period of 21 days, or 50 days in the case of whole potatoes.

This description needs not be more extensive for an expert on the subject to grasp the scope of the invention and the advantages derived therefrom.

The terms of this specification should always be interpreted in their ample, non-limiting sense.

## Claims

1. A procedure for preserving fresh peeled potatoes applicable to both whole and cut potatoes, comprising the immersion of the peeled and washed potatoes in a bath containing an aqueous solution based on a combination of antioxidizing agents and in which a synergic effect agent also intervenes, specifically ascorbic D.L. acid, the potatoes being allowed to drain after removing them from the aqueous solution and finally proceeding to their packing, essentially characterized in that the initial humidification phase, in which the potatoes are placed in a water bath, is performed during a period of 30 minutes, the aqueous solution in which the potatoes are immersed after their initial humidification comprising a combination of two antioxidizing agents, specifically potassium metabisulfite and sodium disulfite, the aqueous solution further comprising a humidifying agent, specifically sorbitol, the aqueous solution also comprising a large amount of ascorbic D.L. acid, which in addition to its antioxidizing synergic function acts as an antimicrobic component; it being foreseen that after maintaining the potatoes immersed in said aqueous solution for a period of approximately 5 minutes, the potatoes are finally packed, said packing being possible in either a normal atmosphere or in a modified or under vacuum atmosphere.

2. A procedure for preserving fresh peeled potatoes according to claim 1, characterized in that the combination of antioxidizing agents participates in a proportion of 0.6 grams per liter of water, while the humidifying agent does so in a proportion of 0.1 gram per liter of water and the ascorbic D.L. acid in a proportion of 0.3 grams per liter of water.
